# EUROPEAN PATENT SPECIFICATION

(11) **EP 4 234 302 B1**
(45) Date of publication and mention of the grant of the patent: **27.11.2024**
(21) Application number: 23157176.1
(22) Date of filing: 17.02.2023
(51) Int. Cl.: B60K 1/04, B62D 21/02, B60K 1/02, B62D 21/07

(54) **VEHICLE-BODY FRONT STRUCTURE**
FAHRZEUGKAROSSERIEFRONTSTRUKTUR
STRUCTURE AVANT DE CARROSSERIE DE VÉHICULE

(30) Priority: 24.02.2022 JP 2022026710
(43) Date of publication of application: 30.08.2023
(73) Proprietor: MAZDA MOTOR CORPORATION, Hiroshima 730-8670 (JP)
(72) Inventor: Yoshida, Kota, Aki-gun, Hiroshima, 730-8670 (JP); Yotsuyanagi, Taiki, Aki-gun, Hiroshima, 730-8670 (JP); Watanabe, Tsuguto, Aki-gun, Hiroshima, 730-8670 (JP); Kawahara, Yasuyuki, Aki-gun, Hiroshima, 730-8670 (JP); Tanaka, Hiroshi, Aki-gun, Hiroshima, 730-8670 (JP)
(74) Representative: Thoma, Michael

(56) References cited:
- EP-A1- 3 202 606
- EP-A1- 3 415 352
- WO-A1-2018/131552

## Description

### [Technical Field]

The present invention generally relates to vehicles, such as electric vehicles, and more particularly, to a vehicle-body front structure for an electric vehicle, for example.

### [Background Art]

For example, in a vehicle-body front portion of an automobile which is disclosed in Patent Literature 1, a pair of left and right front side frames extending in a vehicle front-rear direction are provided, and a front sub-frame is provided below those front side frames and in rear of an engine room. In a left-side front end portion and a right-side front end portion of the front sub-frame, a left pipe frame and a right pipe frame are respectively provided to extend toward vehicle front. The left pipe frame and the right pipe frame are inclined with respect to a center line extending in a front-rear direction of a vehicle so as to be positioned on vehicle-width-direction outer sides toward a front side.

Patent Literature 1 discloses that the left pipe frame and the right pipe frame are inclined to be positioned on the vehicle-width-direction outer sides toward the front side and an impact load can thereby properly be absorbed in a case of an offset collision in which the impact load is input from oblique front of the vehicle.

Document EP 3415352 A1 shows a cross member disposed at the vehicle front portion. The cross member is placed further toward a vehicle front side than the non-contact charger, whereby it is extending in a vehicle transverse direction. The bottom surface of the cross member is disposed further toward a vehicle lower side than the bottom surface of the non-contact charger.

### [Citation List]

### [Patent Literature]

[Patent Literature 1] Japanese Patent Laid-Open No. 2009-101952

### [Summary of Invention]

### [Problems to be Solved by the Invention]

Incidentally, in an electric vehicle, batteries with large capacities for supplying electric power to a traveling motor are installed. It is possible that in order to improve convenience in charging the batteries, a contactless charger is provided. Because in a case of an automobile, charging is presumed to be performed when the automobile stands still, it is necessary to place a power transmission coil in an area below the automobile which stands still (such as a ground surface of a parking lot or a floor surface of a garage, for example) and to set a position for disposing the contactless charger in the vehicle such that the contactless charger is arranged directly above the power transmission coil.

Incidentally, because batteries are often disposed below a floor panel of a vehicle, when the contactless charger is disposed below the floor panel, how to secure a minimum ground clearance becomes a problem. Further, it is possible to dispose the contactless charger below a vehicle-body rear portion, but because the contactless charger includes a large-sized coil which is capable of receiving a large current, each of a thickness dimension of the contactless charger and a dimension in a vehicle front-rear direction becomes long, and as a result, how to secure a departure angle becomes a problem.

The present invention has been made in consideration of such problems, and an object thereof is to improve layout characteristics of a contactless charger while sufficiently securing impact absorbability in an offset collision.

### [Means for Solving the Problems]

To achieve the above object, a first aspect of the present invention can be based on a vehicle-body front structure for an electric vehicle which includes a traveling motor and in which a battery casing housing a battery supplying electric power to the traveling motor is disposed below a floor panel. The vehicle-body front structure includes: a front-side battery frame which is provided in a front portion of the battery casing; a pair of left and right side frames which extend from the front-side battery frame toward vehicle front; a contactless charger which is arranged between the left and right side frames and receives a charging current for the battery from an outside; and a first cross member which is suspended between a portion in the left side frame, the portion being spaced apart from the front-side battery frame to the vehicle front, and a portion in the right side frame, the portion being spaced apart from the front-side battery frame to the vehicle front. The contactless charger has a cross member arrangement portion in which the first cross member is capable of being arranged.

In this configuration, in a case where a left side offset collision is presumed in which an impact load is input from obliquely left front, for example, because the left side frame extends so as to correspond to an input direction of the impact load, the impact load from the obliquely left front is input generally along an axis direction of the left side frame, and the impact load is absorbed by the left side frame. In addition, the impact load input to the left side frame is transmitted to the front-side battery frame and is thus also absorbed by the front-side battery frame. In this case, because the left and right side frames are in a state where those are coupled together by the first cross member, the left side frame is less likely to collapse but is more likely to be axially compressed. The same applies to a right side offset collision.

Because the left and right side frames are positioned on the vehicle-width-direction outer sides toward the front, a wide space in a vehicle width direction is formed between both of the side frames, that is, on a lower side of a vehicle-body front portion. By arranging the contactless charger in the space, how to secure a minimum ground clearance does not become a problem, and how to secure a departure angle does not become a problem either. Furthermore, a large-sized coil can be housed in the contactless charger, and it becomes possible to receive a large current in charging.

Further, an intermediate portion of the first cross member in the vehicle width direction is also arranged in the space, but because the intermediate portion of the first cross member in the vehicle width direction is arranged in the cross member arrangement portion of the contactless charger, layout characteristics of the contactless charger are improved.

The first cross member according to a second aspect of the present invention may have an intermediate member portion which is positioned in an intermediate portion in a vehicle width direction and is arranged in the cross member arrangement portion and outside member portions which extend from both end portions of the intermediate member portion in the vehicle width direction toward vehicle-width-direction outer sides and are coupled with the left and right side frames.

In a third aspect of the present invention, a second cross member which is suspended between the left and right side frames may be provided in vehicle rear of the contactless charger.

In this configuration, in a case where an impact load is input from front, because the second cross member is positioned in the rear of the contactless charger, the contactless charger can be deformed or destroyed in front of the second cross member. Accordingly, it becomes possible to absorb an impact by using the contactless charger.

In a fourth aspect of the present invention , the cross member arrangement portion of the contactless charger is configured with a recess portion which is capable of housing the first cross member. In this configuration, the contactless charger may be attached such that the first cross member is housed in the recess portion of the contactless charger when the vehicle is manufactured, for example, and attachment workability becomes high.

The recess portion according to a fifth aspect of the present invention may have a shape which is open in a lower surface of the contactless charger.

In a sixth aspect of the present invention, the vehicle-body front structure may include a pair of left and right impact absorption members which extend toward vehicle front of the first cross member. In this case, a front portion of the contactless charger can be positioned between the left and right impact absorption members.

In this configuration, for example, because the contactless charger can be arranged by using a space between the impact absorption members which are compressed and deformed in a minor collision, it becomes possible to increase the size of the contactless charger, and a large-sized coil can easily be housed.

### [Advantageous Effects of Invention]

As described above, a cross member is provided which is suspended between a pair of left and right side frames positioned on vehicle-width-direction outer sides toward front, and a cross member arrangement portion in which the cross member is capable of being arranged is provided in a contactless charger which is arranged between the left and right side frames. Accordingly, layout characteristics of the contactless charger can be improved while impact absorbability in an offset collision is sufficiently secured.

### [Brief Description of Drawings]

FIG. 1 is a side view of an electric vehicle according to an embodiment, in which a part of the electric vehicle is omitted.
FIG. 2 is a side view illustrating a state where the electric vehicle is divided into a lower structure and an upper structure.
FIG. 3 is a plan view of the lower structure.
FIG. 4 is a plan view which illustrates a front-side portion of the lower structure while enlarging that.
FIG. 5 is a diagram which corresponds to FIG. 4 and from which a power train, shock absorbers, springs, hubs, and so forth are omitted.
FIG. 6 is a bottom view that illustrates the front-side portion of the lower structure, from which the power train, shock absorbers, springs, hubs, and so forth are omitted, while enlarging the front-side portion.
FIG. 7 is a perspective view of a periphery of rear-side portions of front side frames as seen from below.
FIG. 8 is a cross-sectional view taken along line VII-VII in FIG. 5.

### [Mode for Carrying Out the Invention]

An embodiment of the present invention will hereinafter be described in detail based on drawings. Note that the description of a preferable embodiment in the following is substantially only about examples and is not at all intended to restrict the present invention, applications thereof, or uses thereof.

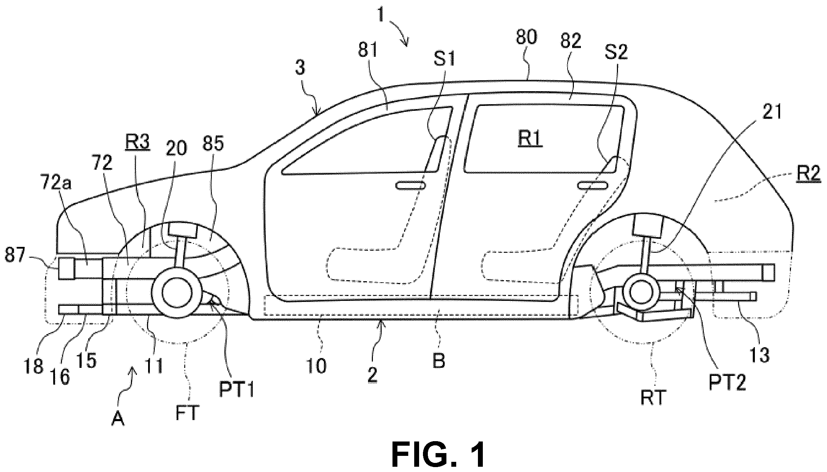

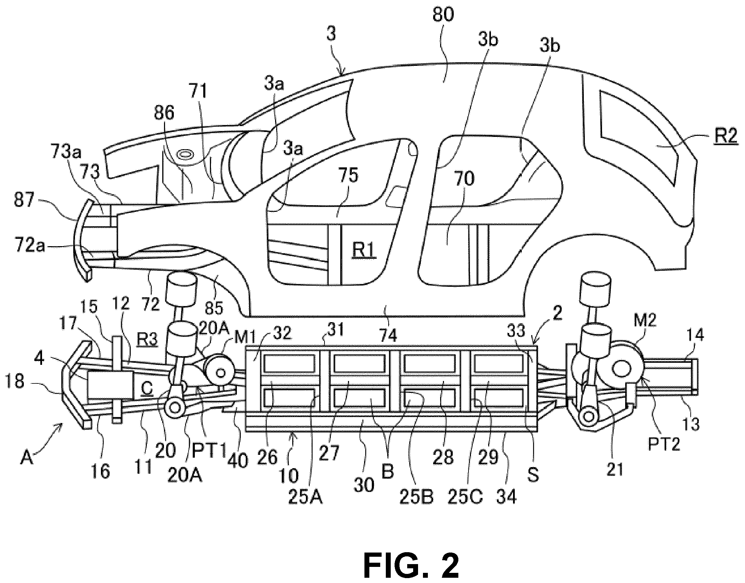

FIG. 1 is a left side view of an electric vehicle (electric automobile) 1 including a vehicle-body front structure A according to the embodiment of the present invention. As illustrated in FIG. 2, the electric vehicle 1 includes a lower structure 2 and an upper structure 3. In FIG. 1, a front bumper, a rear bumper, front and rear wheels, and so forth are omitted and are illustrated by imaginary lines, and each portion is schematically illustrated. In FIG. 2, in addition to the components omitted in FIG. 1, doors, a bonnet hood, a front fender, window glass, front and rear lighting devices, interior materials, and so forth are omitted, and each portion is schematically illustrated.

Note that in the description of the embodiment, a vehicle front side will simply be referred to as "front", a vehicle rear side will simply be referred to as "rear", a vehicle right side will simply be referred to as "right", and a vehicle left side will simply be referred to as "left". A right-left direction of the vehicle is a vehicle width direction.

As illustrated in FIG. 1, the electric vehicle 1 is a passenger automobile. The electric vehicle 1 may be of any of a sedan type, a hatch-back type, a minivan type, and so forth, and its shape is not particularly limited. As illustrated in FIG. 2, in the electric vehicle 1, a vehicle cabin R1 is formed which serves as a staying space for an occupant. As illustrated in FIG. 1, a front seat S1 is provided on a front side in the vehicle cabin R1, and a rear seat S2 is provided in rear of the front seat S1 in the vehicle cabin R1. In the rear of the rear seat S2, a trunk R2 is provided in accordance with necessity. The vehicle cabin R1 and the trunk R2 are provided to the upper structure 3. Note that in the vehicle cabin R1, only the front seat S1 may be provided, or a third row seat (not illustrated) may be provided in the rear of the rear seat S2.

Meanwhile, a space in front of the vehicle cabin R1 as a front portion of the electric vehicle 1 can be set as a power chamber R3, for example. That is, the vehicle-body front structure A is provided to the electric vehicle 1 which includes a front-side traveling motor M1, a rear-side traveling motor M2, batteries B supplying electric power to the traveling motors M1 and M2, and a battery casing 10 housing the batteries B. The battery casing 10 is disposed below a floor panel 70 described later.

The front-side traveling motor M1 produces a driving force for driving left and right front wheels FT, and the front-side power train PT1 is configured with only the front-side traveling motor M1 or with the front-side traveling motor M1, a speed reducer, a transmission, and so forth. Further, the rear-side traveling motor M2 produces a driving force for driving left and right rear wheels RT, and a rear-side power train PT2 is configured with only the rear-side traveling motor M2 or with the rear-side traveling motor M2, a speed reducer, a transmission, and so forth.

In the present embodiment, the rear-side traveling motor M2 is configured to produce a highest output (maximum torque) which is high compared to the front-side traveling motor M1, and the rear-side traveling motor M2 has a larger size than the front-side traveling motor M1. Accompanying that, the rear-side power train PT2 becomes larger than the front-side power train PT1. Note that the rear-side traveling motor M2 may produce a highest output which is low compared to the front-side traveling motor M1, or the rear-side traveling motor M2 and the front-side traveling motor M1 may produce equivalent highest outputs. Further, only the front-side power train PT1 may be provided, or only the rear-side power train PT2 may be provided.

As illustrated in FIG. 2, the lower structure 2 includes the battery casing 10, a pair of left and right front side frames 11 and 12 which extend forward in front of the battery casing 10, and a pair of left and right rear frame 13 and 14 which extend rearward in the rear of the battery casing 10. A reference numeral 11 denotes the left front side frame, and a reference numeral 12 denotes the right front side frame. A reference numeral 13 denotes the left rear frame, and a reference numeral 14 denotes the right rear frame.

In a case of a common electric automobile, a battery casing is often formed as a separate body from a vehicle body and is often detachable from a portion below a floor; however, in the present embodiment, not only the battery casing 10 but also the left and right front side frames 11 and 12 and the left and right rear frames 13 and 14 are integrated with the battery casing 10, and the front side frames 11 and 12 and the rear frames 13 and 14 together with the battery casing 10 are detachable from the upper structure 3.

Specifically, the electric vehicle 1 of the present embodiment is configured to be capable of being divided, in an up-down direction, into the lower structure 2 having the battery casing 10 and the upper structure 3 forming the vehicle cabin R1 and the trunk R2. Being capable of being divided in the up-down direction means that without using welding, adhesion, or the like, the lower structure 2 is integrated with the upper structure 3 by using fastening members such as bolts, nuts, and screws. Accordingly, because the lower structure 2 can be separated from the upper structure 3 in accordance with necessity when maintenance or repairs are performed after the electric vehicle 1 is passed into the hands of a user, high maintainability is achieved. Note that fastening members used in the following description include bolts, nuts, screws, and so forth.

Here, as a vehicle-body structure of an automobile, a vehicle-body structure of a ladder frame type has been known. In a case of the vehicle-body structure of the ladder frame type, the vehicle-body structure is being capable of being divided, in the up-down direction, into a ladder frame and a cabin, but the ladder frame continuously extends in a front-rear direction and thus mainly receives a collision load in a front collision and a rear collision. In a side collision, the ladder frame only subsidiarily receives a collision load, and the collision load is mainly received by the cabin. As described above, in the vehicle-body structure of the ladder frame type, usually, different members receive collision loads between the front collision and rear collision and the side collision.

On the other hand, in a case of the electric vehicle 1 of the present embodiment, the lower structure 2 having the front side frames 11 and 12 and the rear frame 13 and 14 and the upper structure 3 are capable of being divided; however, a technical idea of the present embodiment is largely different from the vehicle-body structure of the ladder frame type in related art in the point that in both cases of the front collision and rear collision and the side collision, a collision load is received by the lower structure 2 and the upper structure 3, and the collision load is capable of being dispersedly absorbed by both of the structures 2 and 3. In the following, structures of the lower structure 2 and the upper structure 3 will be described in detail.

### (Upper Structure)

First, the upper structure 3 will be described. As illustrated in FIG. 2, the upper structure 3 includes the floor panel 70, a dash panel 71, a pair of left and right front main frames 72 and 73, and a pair of left and right side sills 74 and 75. A reference numeral 72 denotes the left front main frame, and a reference numeral 73 denotes the right front main frame. A reference numeral 74 denotes the left side sill, and a reference numeral 75 denotes the right side sill.

The floor panel 70 configures a floor surface of the vehicle cabin R1 and is formed with a steel plate or the like which extends in the front-rear direction and extends also in the left-right direction. A space above the floor panel 70 serves as the vehicle cabin R1. A roof 80 is provided to an upper portion of the vehicle cabin R1. Further, in both of left and right side portions of the upper structure 3, front openings 3a and rear openings 3b are formed. As illustrated in FIG. 1, the front opening 3a and the rear opening 3b are capable of being opened and closed by a front door 81 and a rear door 82, respectively. Note that although not illustrated, a front door and a rear door are disposed on a right side of the upper structure 3 to be capable of being opened and closed.

The dash panel 71 is a member for partitioning the vehicle cabin R1 from the power chamber R3 in the front-rear direction. The dash panel 71 is configured with a steel plate or the like, for example, extends in the left-right direction, and extends also in an up-down direction. On both of left and right sides of a front portion of the upper structure 3, left and right front wheel well portions 85 and 86 for housing the left and right front wheels FT are respectively provided. A left end portion of the dash panel 71 is connected with the left front wheel well portion 85, and a right end portion of the dash panel 71 is connected with the right front wheel well portion 86.

The left and right front main frames 72 and 73 are disposed in a vehicle-body front portion and are highly strong members which extend in the front-rear direction. That is, the left and right front main frames 72 and 73 are positioned in front of the floor panel 70, are positioned above the floor panel 70, and are specifically disposed to extend forward from both of left and right sides in a lower portion of the dash panel 71.

The left and right front main frames 72 and 73 form a left-right symmetrical structure and can be configured by joining plural press-formed materials or can be configured with the extruded material, for example. A cross section of each of the front main frames 72 and 73 in a direction orthogonal to the front-rear direction is set larger than a cross section of each of the front side frames 11 and 12 of the lower structure 2 in the same direction. Accordingly, the front main frames 72 and 73 become thick and highly strong members compared to the front side frames 11 and 12.

Front end portions of the left and right front main frames 72 and 73 respectively have the crush cans 72a and 73a which perform compressive deformation in a front collision and absorb collision energy. The crush cans 72a and 73a are tubular members which extend in the front-rear direction. The crush cans 72a and 73a perform compressive deformation due to an impact load from the front in a phase previous to deformation of the front main frames 72 and 73 and thereby absorb the impact load. The front bumper reinforcement 87 extending in the left-right direction is fixed to front end portions of the left and right crush cans 72a and 73a.

The left and right side sills 74 and 75 are respectively disposed in both of left and right end portions of the floor panel 70 to extend in the front-rear direction. The left end portion of the floor panel 70 is connected with an intermediate portion of the left side sill 74 in the up-down direction, and the right end portion of the floor panel 70 is connected with an intermediate portion of the right side sill 75 in the up-down direction. Upper-side portions of the side sills 74 and 75 are protruded upward from connection portions with the floor panel 70, and lower-side portions of the side sills 74 and 75 are protruded downward from the connection portions with the floor panel 70. Because the battery casing 10 is arranged below the floor panel 70, the battery casing 10 is arranged such that the lower-side portions of the side sills 74 and 75 overlap with the battery casing 10 in a vehicle side view. The battery casing 10 is fixed to the side sills 74 and 75.

### (Lower Structure)

Next, the lower structure 2 will be described. The lower structure 2 includes the front and rear power trains PT1 and PT2, the front wheels FT, the rear wheels RT, front suspension apparatuses 20, rear suspension apparatuses 21, and so forth in addition to the battery casing 10, the front side frames 11 and 12, and the rear frames 13 and 14. Forms of the front suspension apparatus 20 and the rear suspension apparatus 21 are not particularly specified.

The battery casing 10 is a large casing which is formed, below the floor panel 70 of the upper structure 3, to be spanned from a left end portion vicinity to a right end portion vicinity of the floor panel 70 and to be spanned from a front end portion vicinity to a rear end portion vicinity of the floor panel 70. As described above, the battery casing 10 is provided in a wide range of a lower region of the floor panel 70, and it thereby becomes possible to install the battery B with a large capacity in the electric vehicle 1. The battery B may be a lithium-ion battery, a solid-state battery, or the like or may be another secondary cell. Further, the battery B may be a so-called battery cell or may be a battery pack housing plural battery cells. In the present embodiment, the battery B is configured with a battery pack, and plural battery packs are installed in a state where those are aligned in the front-rear direction and the left-right direction.

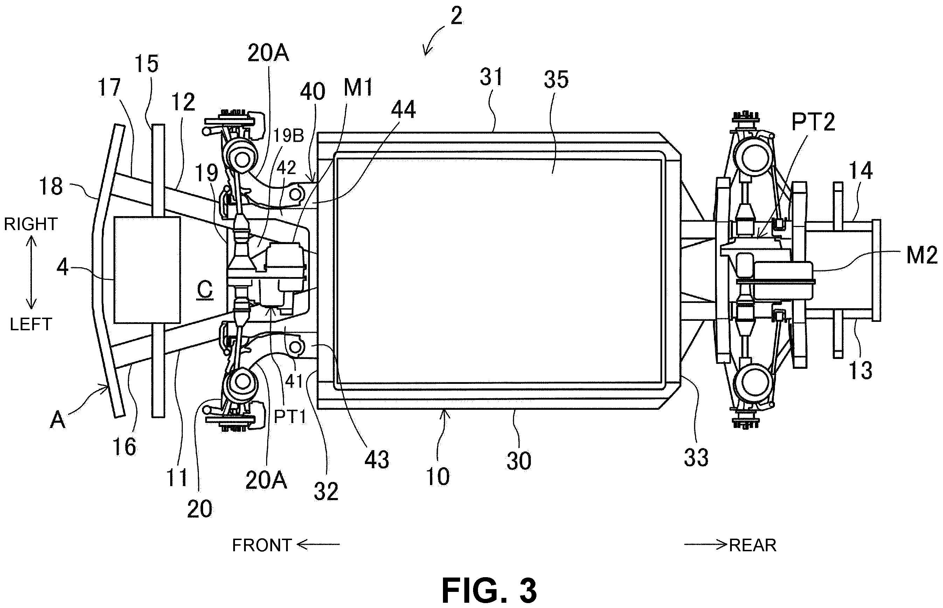

The battery casing 10 includes a left-side battery frame 30, a right-side battery frame 31, a front-side battery frame 32, a rear-side battery frame 33, a bottom plate 34, and the lid body 35 (illustrated in FIG. 3). FIG. 2 illustrates a state where the lid body 35 is detached.

The left-side battery frame 30, the right-side battery frame 31, the front-side battery frame 32, and the rear-side battery frame 33 are configured with an extruded material or the like of an aluminum alloy, for example, but may be configured with an aluminum alloy plate material or a press-formed material of a steel plate as well. The bottom plate 34 can be configured with an extruded material. In the following description, "extruded material" denotes an extruded material of an aluminum alloy, and "press-formed material" denotes an aluminum alloy plate material or a press-formed material of a steel plate. Further, each member may be configured with a casting, for example.

All of cross-sectional shapes of the left-side battery frame 30, the right-side battery frame 31, the front-side battery frame 32, and the rear-side battery frame 33 in respective orthogonal directions to their longitudinal directions are rectangular shapes. Further, the left-side battery frame 30, the right-side battery frame 31, the front-side battery frame 32, and the rear-side battery frame 33 are all arranged at the same height and extend in generally horizontal directions.

The left-side battery frame 30 is provided to a left-side portion of the battery casing 10 and extends in the front-rear direction. The right-side battery frame 31 is provided to a right-side portion of the battery casing 10 and extends in the front-rear direction. Further, the front-side battery frame 32 is provided to a front portion of the battery casing 10 and extends in the left-right direction. The rear-side battery frame 33 is provided to a rear portion of the battery casing 10 and extends in the left-right direction.

A left end portion of the front-side battery frame 32 is connected with a front end portion of the left-side battery frame 30, and a right end portion of the front-side battery frame 32 is connected with a front end portion of the right-side battery frame 31. A left end portion of the rear-side battery frame 33 is connected with a rear end portion of the left-side battery frame 30, and a right end portion of the rear-side battery frame 33 is connected with a rear end portion of the right-side battery frame 31. Consequently, the left-side battery frame 30, the right-side battery frame 31, the front-side battery frame 32, and the rear-side battery frame 33 form a rack which surrounds all of the batteries B in a plan view.

The bottom plate 34 extends generally horizontally and is fixed to lower surfaces of the left-side battery frame 30, the right-side battery frame 31, the front-side battery frame 32, and the rear-side battery frame 33. Further, the lid body 35 is fixed to the lower surfaces of the left-side battery frame 30, the right-side battery frame 31, the front-side battery frame 32, and the rear-side battery frame 33. Consequently, a battery housing space S housing the batteries B (illustrated in FIG. 2) is marked off and formed with the left-side battery frame 30, the right-side battery frame 31, the front-side battery frame 32, the rear-side battery frame 33, the bottom plate 34, and the lid body 35.

The size of the battery housing space S can be changed in accordance with the capacity of the installed batteries B. The size of the battery housing space S is capable of being easily changed by changing lengths of the left-side battery frame 30, the right-side battery frame 31, the front-side battery frame 32, and the rear-side battery frame 33 and a shape of the bottom plate 34. For example, in a case where the electric vehicle 1 is a small vehicle which has a short wheelbase and narrow treads, the left-side battery frame 30, the right-side battery frame 31, the front-side battery frame 32, the rear-side battery frame 33 are made short, the shapes of the bottom plate 34 and the lid body 35 are made small in response to the shortening, and the battery housing space S thereby becomes small in accordance with the small vehicle. On the other hand, in a case of a large vehicle, the left-side battery frame 30, the right-side battery frame 31, the front-side battery frame 32, and the rear-side battery frame 33 are made long, the shapes of the bottom plate 34 and the lid body 35 are made large in response to the elongation, and the battery housing space S thereby becomes large in accordance with the large vehicle. In a case where the left-side battery frame 30, the right-side battery frame 31, the front-side battery frame 32, and the rear-side battery frame 33 are configured with the extruded material, the lengths can easily be changed. Further, the bottom plate 34 can be configured with the extruded material, and its shape can thereby easily be changed.

An upper portion of the battery housing space S may be closed by the above lid body 35 or may be closed by the floor panel 70 of the upper structure 3. In the battery housing space S, other than the batteries B, a cooling device cooling the batteries B, a heating device heating the batteries B, and so forth (temperature adjustment devices) can also be provided. Further, electric power of the batteries B is supplied to the traveling motors M1 and M2 via a control device which is not illustrated. In the present embodiment, it is possible to charge the batteries B via a contactless charger 4 illustrated in FIG. 2, and the batteries B are configured to be capable of being charged by a charging socket (not illustrated).

As illustrated in FIG. 2, in the internal portion of the battery casing 10, as strength members extending in the left-right direction, first to third inside-casing members 25A, 25B, and 25C are provided. All of heights of the first to third inside-casing members 25A, 25B, and 25C are the same and are generally the same as the heights of the left-side battery frame 30 and so forth. The inside-casing members 25A, 25B, and 25C may be configured with the extruded material or may be configured with the press-formed material. In the present embodiment, three inside-casing members 25A, 25B, and 25C are provided, but the number of inside-casing members 25A, 25B, and 25C may be increased or decreased in accordance with the dimension of the battery casing 10 in the front-rear direction.

The first to third inside-casing members 25A, 25B, and 25C are arranged at distances from each other in the front-rear direction, the first inside-casing member 25A is in a foremost position, and the third inside-casing member 25C is in a rearmost position. A lower portion of each of the inside-casing members 25A, 25B, and 25C is fixed to an upper surface of the bottom plate 34. Further, a left end portion of each of the inside-casing members 25A, 25B, and 25C is fixed to an inner surface (right-side surface) of the left-side battery frame 30, and a right end portion of each of the inside-casing members 25A, 25B, and 25C is fixed to an inner surface (left-side surface) of the right-side battery frame 31. In other words, the inside-casing members 25A, 25B, and 25C are members which connect the left-side battery frame 30 and the right-side battery frame 31 together.

In the internal portion of the battery casing 10, as strength members extending in the front-rear direction, a front central member 26 and first to third rear central members (rear reinforcement members) 27 to 29 are provided. The front central member 26 and the first to third rear central members 27 to 29 are arranged at generally the same heights and are provided at a center of the battery casing 10 in the left-right direction. Lower end portions of the front central member 26 and the first to third rear central members 27 to 29 are mounted on the upper surface of the bottom plate 34.

The front central member 26 is arranged between the front-side battery frame 32 and the first inside-casing member 25A, a front end portion of the front central member 26 is fixed to a central portion of the front-side battery frame 32 in the left-right direction, and a rear end portion of the front central member 26 is fixed to a central portion of the first inside-casing member 25A in the left-right direction. Consequently, the front-side battery frame 32 is a member which extends so as to connect the front end portions of the left-side battery frame 30 and the right-side battery frame 31 with the front end portion of the front central member 26.

The first rear central member 27 is arranged between the first inside-casing member 25A and the second inside-casing member 25B, a front end portion of the first rear central member 27 is fixed to the central portion of the first inside-casing member 25A in the left-right direction, and a rear end portion of the first rear central member 27 is fixed to a central portion of the second inside-casing member 25B in the left-right direction. Further, the second rear central member 28 is arranged between the second inside-casing member 25B and the third inside-casing member 25C, a front end portion of the second rear central member 28 is fixed to the central portion of the second inside-casing member 25B in the left-right direction, and a rear end portion of the second rear central member 28 is fixed to a central portion of the third inside-casing member 25C in the left-right direction. Further, the third rear central member 29 is arranged between the third inside-casing member 25C and the rear-side battery frame 33, a front end portion of the third rear central member 29 is fixed to the central portion of the third inside-casing member 25C in the left-right direction, and a rear end portion of the third rear central member 29 is fixed to a central portion of the rear-side battery frame 33 in the left-right direction. Consequently, because the first to third inside-casing members 25A, 25B, and 25C and the front central member 26 and first to third rear central members 27 to 29 are disposed in a lattice manner in the internal portion of the battery casing 10 and are coupled with each other, a reinforcement effect for the battery casing 10 is further enhanced.

When an imaginary straight line extending in the front-rear direction is presumed in a plan view, the positions of the front central member 26 and the first to third rear central members 27 to 29 in the left-right direction are set such that the positions are arranged on the imaginary straight line. In other words, the first to third rear central members 27 to 29 are provided to be positioned on a rearward imaginary extension line of the front central member 26. Note that the front central member 26 and the first to third rear central members 27 to 29 may be configured with one member which is continuous in the front-rear direction.

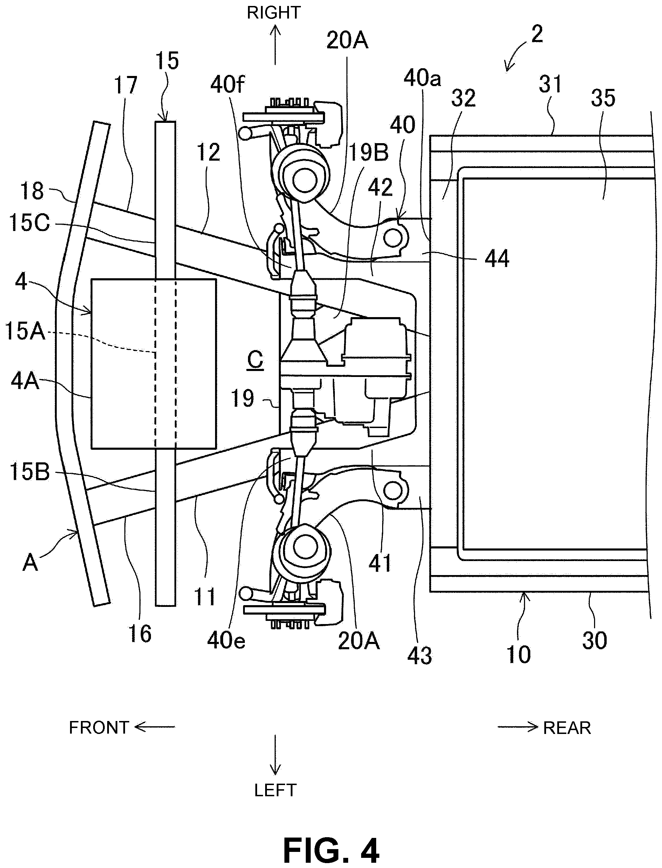

As illustrated in FIGS. 4 to 6 and so forth, the vehicle-body front structure A includes the pair of left and right front side frames 11 and 12, a frame bracket 40, a first cross member 15, a pair of left and right impact absorption members 16 and 17, and a second cross member 19. In the present embodiment, in addition to the above members, the vehicle-body front structure A includes a front member 18, reinforcement members 19A and 19B, and so forth. Members configuring the vehicle-body front structure A are not limited to the above-described members and may include other members, apparatuses, devices, and so forth. Further, among the above-described members, members which do not serve as configuration elements required for the present invention may be omitted.

The front side frames 11 and 12 linearly and generally horizontally extend below left and right front main frames 72 and 73 provided to the upper structure 3. The front side frames 11 and 12 can be configured with the extruded material, the press-formed material, or the like, for example. In the present embodiment, because the front side frames 11 and 12 are configured with the extruded material, their cross-sectional shapes in a direction orthogonal to the front-rear direction are generally equivalent from front end portions to rear end portions.

The left and right front side frames 11 and 12 are mounted on the front-side battery frame 32 configuring the front portion of the battery casing 10 via the frame bracket 40. In other words, rear portions of the left and right front side frames 11 and 12 are coupled with the front-side battery frame 32 by the frame bracket 40. The frame bracket 40 is an integrally formed component of metal and extends in the left-right direction along a front surface of the front-side battery frame 32. The rear portions of the left and right front side frames 11 and 12 are fixed to the frame bracket 40. Metal which configures the frame bracket 40 is not particularly limited. For example, aluminum and so forth can be raised, and in this case, the frame bracket 40 can be formed by aluminum die-casting.

The left and right front side frames 11 and 12 are mounted on the front-side battery frame 32 via the frame bracket 40, but the rear portions of the front side frames 11 and 12 are caused to adjoin the front surface of the front-side battery frame 32. Consequently, the front side frames 11 and 12 extend forward from the front-side battery frame 32. Note that the rear portion of the front side frames 11 and 12 may slightly be spaced apart forward from the front surface of the front-side battery frame 32. In this case also, viewing those as the whole, it can be considered that the front side frames 11 and 12 extend forward from the front-side battery frame 32.

The rear portion of the left front side frame 11 is arranged to correspond to a section on a left side of a center of the front-side battery frame 32 in the left-right direction. Further, the rear portion of the right front side frame 12 is arranged to correspond to a section on a right side of the center of the front-side battery frame 32 in the left-right direction. Accordingly, a distance between the left and right front side frames 11 and 12 becomes a predetermined distance. A distance between the rear portions of the front side frames 11 and 12 is set narrower than a distance between the left-side battery frame 30 and the right-side battery frame 31 of the battery casing 10.

Heights of the left and right front side frames 11 and 12 are generally the same. Further, the left and right front side frames 11 and 12, the front central member 26 of the battery casing 10, the left-side battery frame 30, and the right-side battery frame 31 are disposed at generally the same heights.

The left and right front side frames 11 and 12 extend to be positioned on the vehicle-width-direction outer sides toward the front. That is, the left front side frame 11 is inclined with respect to the imaginary straight line extending in the front-rear direction of the vehicle in a plan view so as to be positioned on a left side toward the front. Further, the right front side frame 12 is inclined with respect to the imaginary straight line extending in the front-rear direction of the vehicle in a plan view so as to be positioned on a right side toward the front. Accordingly, the distance between the left and right front side frames 11 and 12 (a separation distance in the vehicle width direction) becomes wider toward the front, and in a portion between the left and right front side frames 11 and 12, a space C is formed in which all or a part of various components, apparatuses, devices, and so forth are capable of being arranged. Then, the space C has a shape which is enlarged in the vehicle width direction toward the front.

In the present embodiment, the contactless charger 4 is arranged in the space C formed between the left and right front side frames 11 and 12. The contactless charger 4 is configured to be capable of receiving a charging current for the batteries B from the outside. Specifically, the electric vehicle 1 conforms to a system which wirelessly transmits electric power by using electromagnetic induction (wireless power transmission system). Although not illustrated, the wireless power transmission system includes a power transmission coil placed directly below the electric vehicle 1 which stands still and the contactless charger 4 of a vehicle-mounted type. The power transmission coil is placed in a ground surface of a parking lot, a floor surface of a garage, or the like, for example.

The contactless charger 4 includes a power reception coil, a control device, and so forth (not illustrated) and a housing 4A which houses those. Electric power received by the power reception coil of the contactless charger 4 is supplied to the batteries B and is used as the charging current. The housing 4A is formed into a shape which is flat in the front-rear direction and the left-right direction, for example. Although not illustrated, an electric power cable or the like extends from the housing 4A. With the electric power cable, the batteries B are directly or indirectly connected.

An inclination angle of the left front side frame 11 with respect to the above imaginary straight line is equivalent to an inclination angle of a right front side frame 12 with respect to the above imaginary straight line. A front portion of the left front side frame 11 is arranged on a vehicle-width-direction inner side of the left-side battery frame 30 of the battery casing 10. Further, a front portion of the right front side frame 12 is arranged on the vehicle-width-direction inner side of the right-side battery frame 31 of the battery casing 10.

Further, as illustrated in FIG. 1, positions, in the front-rear direction, of the front portions of the left and right front side frames 11 and 12 and of front portions of the left and right front main frames 72 and 73 of the upper structure 3 are set to generally the same positions.

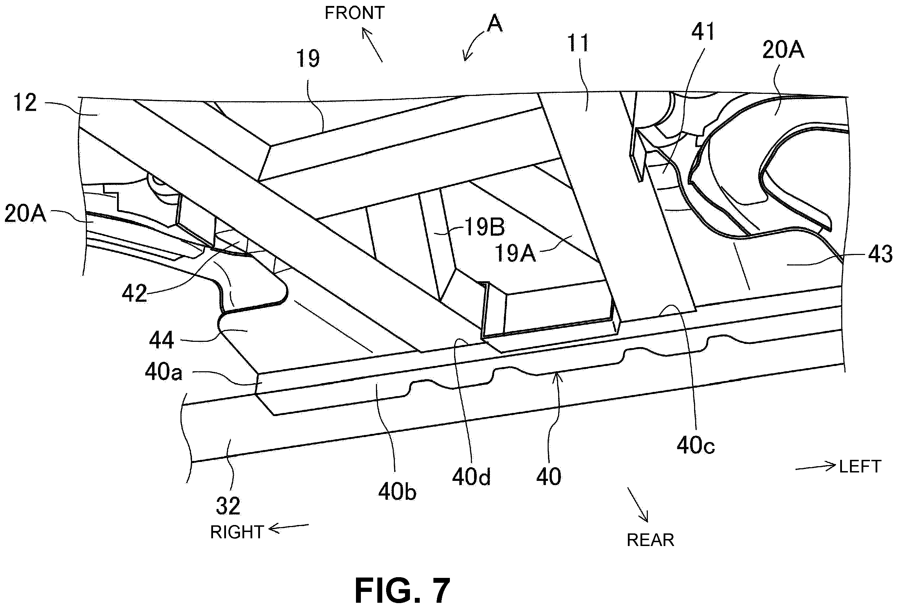

As illustrated in FIG. 7, the frame bracket 40 includes a vertical plate portion 40a which extends in the vehicle width direction and the up-down direction along the front surface of the front-side battery frame 32 and a lower plate portion 40b which extends rearward from a lower edge portion of the vertical plate portion 40a along the lower surface of the front-side battery frame 32 and which extends also in the vehicle width direction. The vertical plate portion 40a and the lower plate portion 40b are fixed to the front-side battery frame 32 by fastening members or the like. In such a manner, the vertical plate portion 40a and the lower plate portion 40b of the frame bracket 40 are respectively fixed to the front surface and the lower surface of the front-side battery frame 32, and mounting rigidity of the frame bracket 40 on the front-side battery frame 32 can thereby be enhanced.

In the vertical plate portion 40a of the frame bracket 40, a left-side insertion hole 40c into which the rear portion of the left front side frame 11 is inserted and a right-side insertion hole 40d into which the rear portion of the right front side frame 12 is inserted are formed at a distance in the vehicle width direction. The rear portion of the left front side frame 11 is fixed to the frame bracket 40 by an adhesive, a fastening member, or the like, for example, in a state where the rear portion is inserted into the left-side insertion hole 40c.

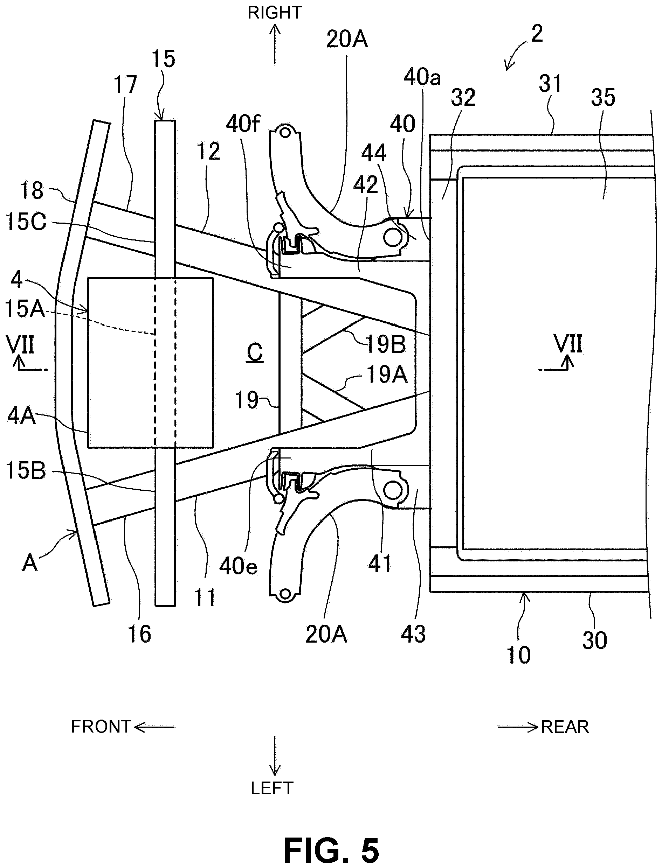

As illustrated in FIG. 5, the frame bracket 40 includes a left-side upper plate portion 40e which extends in the front-rear direction so as to cover an upper surface of the left front side frame 11 and a right-side upper plate portion 40f which extends in the front-rear direction so as to cover an upper surface of the right front side frame 12. The left-side upper plate portion 40e and the upper surface of the left front side frame 11 are caused to adhere to each other by an adhesive, for example, and the right-side upper plate portion 40f and the upper surface of the right front side frame 12 are similarly caused to adhere to each other. Accordingly, the left and right front side frames 11 and 12 can firmly be fixed to the frame bracket 40.

The frame bracket 40 has a left-side support portion 41 and a right-side support portion 42, and the left-side support portion 41 and the right-side support portion 42 are integrally shaped with the vertical plate portion 40a and the lower plate portion 40b. The left-side support portion 41 is a portion which is arranged on the vehicle-width-direction outer side (left side) of the left front side frame 11 and supports the above front side frame 11 from the vehicle-width-direction outer side. Specifically, the left-side support portion 41 is protruded forward from a left-side portion of the left-side insertion hole 40c in the vertical plate portion 40a and extends along a left side surface of the left front side frame 11. A front portion of the left-side support portion 41 reaches the vicinity of a central portion of the left front side frame 11 in the front-rear direction, and it thus becomes possible to support a wide range of the left-side support portion 41 by the left-side support portion 41. It is also possible to cause the left front side frame 11 to adhere to the left-side support portion 41.

Further, the right-side support portion 42 is a portion which is arranged on the vehicle-width-direction outer side (right side) of the right front side frame 12 and supports the above front side frame 12 from the vehicle-width-direction outer side. Specifically, the right-side support portion 42 is protruded forward from a right-side portion of the right-side insertion hole 40d in the vertical plate portion 40a and extends along a right side surface of the right front side frame 12. A front portion of the right-side support portion 42 reaches the vicinity of a central portion of the right front side frame 12 in the front-rear direction, and it thus becomes possible to support a wide range of the right-side support portion 42 by the right-side support portion 42. It is also possible to cause the right front side frame 12 to adhere to the right-side support portion 42.

On the vehicle-width-direction outer side of the frame bracket 40, left and right suspension arms 20A configuring the front suspension apparatuses 20 are supported to be swingable in the up-down direction. That is, in a portion on a left side of the left-side support portion 41 in the frame bracket 40, a left-side arm mounting portion 43 is provided to be protruded to a left side. On the left-side arm mounting portion 43, a base end portion of the left suspension arm 20A is mounted to be rotatable around a shaft extending in the front-rear direction. Further, in a portion on a right side of the right-side support portion 42 in the frame bracket 40, a right-side arm mounting portion 44 is provided to be protruded to a right side. On the right-side arm mounting portion 44, a base end portion of the right suspension arm 20A is mounted to be rotatable around a shaft extending in the front-rear direction.

The first cross member 15 is a member, which is suspended between a portion of the left front side frame 11 which is spaced apart forward from the front-side battery frame 32 and a portion of the right front side frame 12 which is spaced apart forward from the front-side battery frame 32, and linearly extends in the vehicle width direction. The first cross member 15 can also be configured with the extruded material, the press-formed member, or the like. In the present embodiment, a left-side portion of the first cross member 15 is fixed to the front portion of the left front side frame 11, and a right-side portion of the first cross member 15 is fixed to the front portion of the right front side frame 12. Consequently, the front portions of the left and right front side frames 11 and 12 are coupled with each other by the first cross member 15.

Further, the first cross member 15 is generally parallel with the front-side battery frame 32. Accordingly, in a plan view, a rectangular shape (a trapezoidal shape in the present example) is formed with the first cross member 15, the left and right front side frames 11 and 12, and the front-side battery frame 32, and a closed cross-section is configured when a horizontal cross section is seen.

A left side of the first cross member 15 is protruded to the vehicle-width-direction outer side of the front portion of the left front side frame 11. Further, a right side of the first cross member 15 is protruded to the vehicle-width-direction outer side of the front portion of the right front side frame 12.

The first cross member 15 has an intermediate member portion 15A which is positioned in an intermediate portion in the vehicle width direction and left and right outside member portions 15B and 15C which extend from both end portions of the intermediate member portion 15A in the vehicle width direction toward vehicle-width-direction outer sides and are coupled with the left and right front side frames 11 and 12. The intermediate member portion 15A is a portion which is arranged in the space C formed between the left and right front side frames 11 and 12. The left outside member portion 15B is a portion which is fixed to the left front side frame 11. The right outside member portion 15C is a portion which is fixed to the right front side frame 12.

In the space C formed between the left and right front side frames 11 and 12, the intermediate member portion 15A is arranged, and the above contactless charger 4 is also arranged. Because the contactless charger 4 includes a large-sized coil which is capable of receiving a large current, its dimension in the front-rear direction becomes long, and the contactless charger 4 is in a positional relationship in which a part of the contactless charger 4 overlaps with the intermediate member portion 15A in a plan view. As a measure against this, it is possible to arrange the contactless charger 4 above the intermediate member portion 15A, but in such a case, the contactless charger 4 is spaced apart from the power transmission coil, and charging efficiency is lowered. It is possible to arrange the contactless charger 4 below the intermediate member portion 15A instead, but in such a case, a minimum ground clearance becomes low. As another measure, it is also possible to dispose the contactless charger 4 below the floor panel 70, but because the batteries B are installed below the floor panel 70, how to secure the minimum ground clearance becomes a problem. As a still another measure, it is also possible to dispose the contactless charger 4 below a vehicle-body rear portion, but because the contactless charger 4 includes a large-sized coil as described above, each of a thickness dimension and the dimension in the front-rear direction is long, and as a result, how to secure a departure angle becomes a problem.

In the present embodiment, in order to establish layout even in the positional relationship in which a part of the contactless charger 4 overlaps with the intermediate member portion 15A of the first cross member 15 in a plan view, the contactless charger 4 has a cross member arrangement portion 4a in which the intermediate member portion 15A of the first cross member 15 is capable of being arranged.

More particularly, said cross member arrangement portion 4a may form an accommodation portion in which a part of the cross member 15 may be accommodated and/or through which the cross member 15 may extend. The contactless charger 4, in particular the housing of the contactless charger 4, may define a virtual enveloping contour through which the cross member 15 may extend due to the provision of the aforementioned cross member arrangement portion 4a. Said cross member 15 may be at least partly countersunk into said enveloping contour of the charger 4 and/or into the housing thereof, and/or may be flush countersunk into the enveloping contour or housing of the contactless charger 4. For example, a lower side of the cross member 15 may be substantially flush with a lower side of the contactless charger 4.

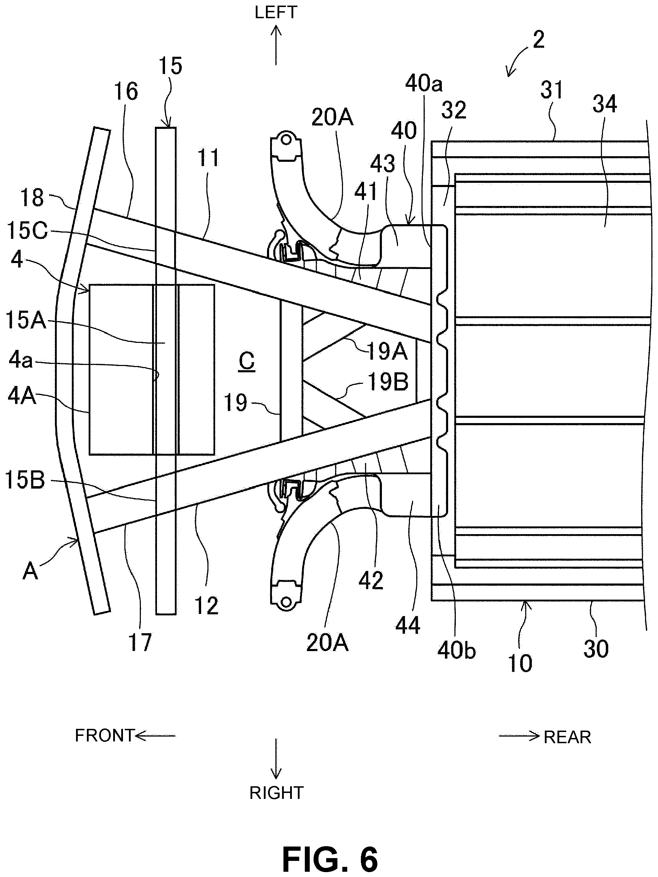

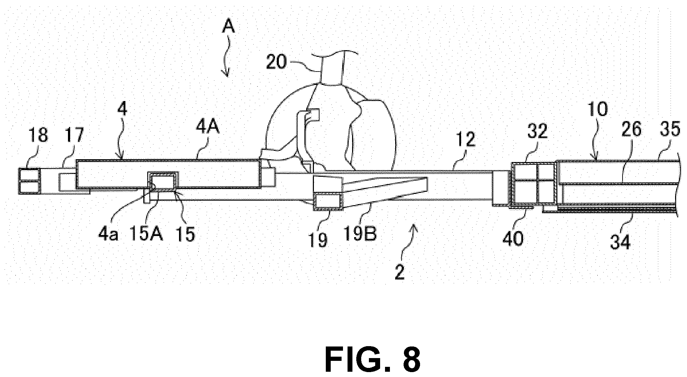

Specifically, as illustrated in FIG. 8 and so forth, the cross member arrangement portion 4a is configured with a recess portion or groove-like channel, which is capable of housing the intermediate member portion 15A, and has a shape which opens in a lower surface of the housing 4A of the contactless charger 4. As illustrated in FIG. 6, because the intermediate member portion 15A is continuous in the left-right direction, the cross member arrangement portion 4a is also continuous in the left-right direction from a left end portion to a right end portion of the housing 4A while corresponding to the shape of the intermediate member portion 15A. Consequently, it can be considered that the cross member arrangement portion 4a is configured with a groove portion which is capable of housing the intermediate member portion 15A. An inner surface of the cross member arrangement portion 4a may or may not contact with the intermediate member portion 15A.

Because the cross member arrangement portion 4a is open downward, the contactless charger 4 may be attached such that the first cross member 15 is housed in the cross member arrangement portion 4a of the contactless charger 4 when the vehicle is manufactured, for example, and attachment workability becomes high. The first cross member 15 is housed in the cross member arrangement portion 4a, it thereby becomes possible to lower the contactless charger 4 to the vicinity of a lower end of the vehicle body, and charging efficiency is improved.

Note that although not illustrated, in a case where the first cross member 15 is inclined with respect to a center line in a vehicle front-rear direction, the cross member arrangement portion 4a may be inclined so as to correspond to the first cross member 15. Further, in a case where plural first cross members 15 are provided, plural cross member arrangement portions 4a can be formed.

Because the cross member arrangement portion 4a is provided to the flat housing 4A, a dimension of the cross member arrangement portion 4a in the up-down direction is set equivalent to or more than 1/2 of a dimension of the housing 4A in the up-down direction. Note that the dimension of the cross member arrangement portion 4a in the up-down direction is not particularly limited, and it is sufficient that the dimension is shorter than the dimension of the housing 4A in the up-down direction.

In an internal portion of the housing 4A, coils can respectively be housed in a portion on a front side of and a portion on a rear side of the cross member arrangement portion 4a, and in addition, it is possible to house the coil only in one of the portion on the front side of and the portion on the rear side of the cross member arrangement portion 4a and to house a control device or the like in the other. Further, in accordance with necessity, a control device or the like may be housed in a portion above the cross member arrangement portion 4a in the internal portion of the housing 4A.

The second cross member 19 is arranged in the rear of the contactless charger 4. Specifically, the second cross member 19 is a member, which is arranged between the first cross member 15 and the front-side battery frame 32 and is suspended between the left front side frame 11 and the right front side frame 12, and linearly extends in the vehicle width direction. The second cross member 19 can also be configured with the extruded material, the press-formed member, or the like. A dimension of the second cross member 19 in the vehicle width direction is shorter than a dimension of the first cross member 15 in the vehicle width direction.

As also illustrated in FIG. 7, a left end portion of the second cross member 19 is fixed to a right side surface of the left front side frame 11 by adhesion, welding, a fastening member, or the like. A right end portion of the second cross member 19 is similarly fixed to a left side surface of the right front side frame 12. Accordingly, intermediate portions of the left and right front side frames 11 and 12 in the front-rear direction are coupled with each other.

Further, the second cross member 19 is generally parallel with the front-side battery frame 32. Accordingly, in a plan view, a rectangular shape (a trapezoidal shape in the present example) is formed with the second cross member 19, the left and right front side frames 11 and 12, and the front-side battery frame 32, and a closed cross-section is configured when a horizontal cross section is seen. Further, in a plan view, a rectangular shape is also formed with the second cross member 19, the left and right front side frames 11 and 12, and the first cross member 15.

As illustrated in FIG. 5, the left reinforcement member 19A extends rearward from a portion on a left side of a central portion of the second cross member 19 in the vehicle width direction to the front-side battery frame 32. A rear portion of the left reinforcement member 19A is fixed to the right side surface of the left front side frame 11. Further, the right reinforcement member 19B extends rearward from a portion on a right side of the central portion of the second cross member 19 in the vehicle width direction to the front-side battery frame 32. A rear portion of the right reinforcement member 19B is fixed to the left side surface of the right front side frame 12.

The left impact absorption member 16 is provided in front of the left front side frame 11 and is configured with a tubular member which extends forward. Further, the right impact absorption member 17 is provided in front of the right front side frame 12 and is configured with a tubular member which extends forward. Similarly to crush cans 72a and 73a of the upper structure 3, the impact absorption members 16 and 17 perform compressive deformation due to an impact load from the front in a phase previous to deformation of the front side frames 11 and 12 and thereby absorb the impact load. As illustrated in FIG. 1, positions, in the front-rear direction, of rear portions of the left and right impact absorption members 16 and 17 and of rear portions of the crush cans 72a and 73a of the upper structure 3 are set to generally the same positions.

The rear portion of the left impact absorption member 16 is fixed to the front portion of the left front side frame 11. A direction in which the left impact absorption member 16 extends is along the longitudinal direction of the left front side frame 11, and an axis line of the impact absorption member 16 is positioned on a forward extension line of the front side frame 11. Further, the rear portion of the right impact absorption member 17 is fixed to the front portion of the right front side frame 12. A direction in which the right impact absorption member 17 extends is along the longitudinal direction of the right front side frame 12, and an axis line of the impact absorption member 17 is positioned on a forward extension line of the front side frame 12. A front portion of the contactless charger 4 is positioned between the left and right impact absorption members 16 and 17. Accordingly, because the contactless charger 4 can be arranged by using a space between the impact absorption members 16 and 17 which are compressed and deformed in a minor collision, it becomes possible to increase the size of contactless charger 4, and a large-sized coil can easily be housed.

As illustrated in FIG. 3, FIG. 4 and so forth, the front member 18 is a member which is suspended between the left and right impact absorption members 16 and 17. A portion on a left side of a central portion of the front member 18 in the vehicle width direction is fixed to a front portion of the left impact absorption member 16, and a portion on a right side of the central portion of the front member 18 in the vehicle width direction is fixed to a front portion of the right impact absorption member 17. Accordingly, the left and right impact absorption members 16 and 17 are coupled together by the front member 18. The front portion of the contactless charger 4 is positioned in the rear of the front member 18.

As illustrated in FIG. 1, positions, in the front-rear direction, of the front member 18 and of a front bumper reinforcement 87 of the upper structure 3 are set to generally the same positions, and the front member 18 is positioned directly below the front bumper reinforcement 87.

### (Working Effects of Embodiment)

As described above, the contactless charger 4 is arranged in the space C formed between the left and right front side frames 11 and 12, that is, on a lower side of the vehicle-body front portion. Accordingly, how to secure the minimum ground clearance does not become a problem, and how to secure the departure angle does not become a problem either. The intermediate member portion 15A of the first cross member 15 is also arranged in the space C, but because the intermediate member portion 15A is arranged in the cross member arrangement portion 4a of the contactless charger 4, layout characteristics of the contactless charger 4 are improved.

Further, because a structure is made in which the cross member arrangement portion 4a is open downward and the intermediate member portion 15A is capable of being inserted from a portion below the cross member arrangement portion 4a, the contactless charger 4 is not protruded downward in the vehicle-body front portion, and how to secure an approach angle does not become a problem.

Next, a description will be made about a collision of the electric vehicle 1 which is configured as described above. For example, in a case where a left side offset collision is presumed in which an impact load is input from obliquely left front, because the left front side frame 11 extends so as to correspond to an input direction of the impact load, the impact load from the obliquely left front is input generally along an axis direction of the left front side frame 11, and the impact load is absorbed by the left front side frame 11. In addition, the impact load input to the left front side frame 11 is transmitted to the front-side battery frame 32 and is thus also absorbed by the front-side battery frame 32. In this case, because the left and right front side frames 11 and 12 are in a state where those are coupled together by the first cross member 15, the front side frames 11 are less likely to collapse but are more likely to be axially compressed. The same applies to a right side offset collision.

Further, in a case where an impact load is input from front, because the second cross member 19 is positioned in the rear of the contactless charger 4, the contactless charger 4 can be deformed or destroyed in front of the second cross member 19. Accordingly, it becomes possible to absorb an impact by using the contactless charger 4.

The above-described embodiment is merely an example in all respects and is not to be construed in a limited manner. Furthermore, all modifications and changes belonging to the equivalent scope of the claims are included in the scope of the present invention.

### [Industrial Applicability]

As described in the foregoing, a vehicle-body front structure according to the present invention can be provided to an electric vehicle, for example.

### [Reference Signs List]

- 1: electric vehicle
- 4: contactless charger
- 10: battery casing
- 11, 12: front side frame
- 15: first cross member
- 15A: intermediate member portion
- 15B, 15C: outside member portion
- 19: second cross member
- 32: front-side battery frame
- 70: floor panel
- A: vehicle-body front structure
- B: battery
- M1: traveling motor

## Claims

1. A vehicle-body front structure for an electric vehicle (1) which includes a traveling motor (M1, M2) and in which a battery casing (10) housing a battery (B) supplying electric power to the traveling motor (M1, M2) is disposed below a floor panel (70), the vehicle-body front structure comprising:
a front-side battery frame (32) which is provided in a front portion of the battery casing (10);
a pair of left and right side frames (11, 12) which extend from the front-side battery frame (32) toward vehicle front;
a contactless charger (4) which is arranged between the left and right side frames (11, 12) and receives a charging current for the battery (B) from an outside; and
a first cross member (15) which is suspended between a portion in the left side frame (11), the portion being spaced apart from the front-side battery frame (32) to the vehicle front, and a portion in the right side frame (12), the portion being spaced apart from the front-side battery frame (32) to the vehicle front, wherein
the contactless charger (4) has a cross member arrangement portion (4A) in which the first cross member (15) is capable of being arranged, **characterised in that**
the cross member arrangement portion (4A) of the contactless charger (4) is configured with a recess portion which is capable of housing the first cross member (15).

2. The vehicle-body front structure according to claim 1, wherein
the first cross member (15) has an intermediate member portion (15A) which is positioned in an intermediate portion in a vehicle width direction and is arranged in the cross member arrangement portion (4A) and outside member portions (15B, 15C) which extend from both end portions of the intermediate member portion (15A) in the vehicle width direction toward vehicle-width-direction outer sides and are coupled with the left and right side frames (11, 12), said outside member portions (15B, 15C) extending outside said cross member arrangement portion 4A of the contactless charger (4).

3. The vehicle-body front structure according to claim 1 or 2, wherein
a second cross member (19) which is suspended between the left and right side frames (11, 12)is provided in vehicle rear of the contactless charger (4).

4. The vehicle-body front structure according to claim1, wherein
the recess portion has a shape which is open in a lower surface of the contactless charger (4).

5. The vehicle-body front structure according to any one of claims 1 to 4, comprising
a pair of left and right impact absorption members (16, 17) which extend toward vehicle front of the first cross member (15), wherein
a front portion of the contactless charger (4) is positioned between the left and right impact absorption members.

6. The vehicle-body front structure according to claim 5, wherein a front member (18) extending in the vehicle width-wise direction in a region forwardly of the contactless charger (4), is connected to and supported by said left and right impact absorption members (16, 17), wherein said front portion of the contactless charger (4) is positioned between said front member (18) and said cross member (15).

7. The vehicle-body front structure according to any one of the preceding claims, wherein said cross member arrangement portion 4A of the contactless charger (4) defines a downwardly open groove-like channel in a lower side of the contactless charger (4), wherein said first cross member (15) is at least partly countersunk in said channel.

8. The vehicle-body front structure according to the preceding claim, wherein a lower side of said first cross member (15) is substantially flush with a lower side of said contactless charger (4) and/or wherein a lower side of said contactless charger (4) is positioned higher than a lower side of said left and right side frames (11, 12).

9. The vehicle-body front structure according to any one of the preceding claims, wherein said cross member arrangement portion (4A) of the contactless charger (4) is offset relative to a center of the contactless charger towards the vehicle rear end and/or a front portion of the contactless charger (4) positioned in front of the first cross member (15) is larger than a rear portion of the contactless charger (4) positioned rearwardly of the first cross member (15).

10. The vehicle-body front structure according to any one of the preceding claims, wherein said contactless charger (4) includes at least one coil housed in a portion on a front side of the first cross member (15) and at least one coil housed in a portion on a rear-side of said first cross member (15).

11. The vehicle-body front structure according to any one of the preceding claims, wherein said pair of left and right side frames (11, 12) extend below left and right main side frame members (72, 73) of an upper structure (3), wherein said contactless charger (4), with an upper side thereof, is positioned lower than lower sides of said left and right main side frame members (72, 73) .

12. A vehicle, in particular an electric vehicle, comprising a vehicle body front structure as defined by any one of the preceding claims.

## Patentansprüche

1. Fahrzeugkarosserie-Frontstruktur für ein Elektrofahrzeug (1), das einen Fahrmotor (M1, M2) beinhaltet und in dem ein Batteriegehäuse (10), das eine Batterie (B) unterbringt, die den Fahrmotor (M1, M2) mit elektrischer Leistung versorgt, unter einer Bodenplatte (70) angeordnet ist, wobei die Fahrzeugkarosserie-Frontstruktur Folgendes umfasst:
einen Frontseiten-Batterierahmen (32), der in einem Frontabschnitt des Batteriegehäuses (10) bereitgestellt ist;
ein Paar von linken und rechten Seitenrahmen (11, 12), die sich von dem Frontseiten-Batterierahmen (32) in Richtung der Fahrzeugfront erstrecken;
ein kontaktloses Ladegerät (4), das zwischen dem linken und dem rechten Seitenrahmen (11, 12) angeordnet ist und einen Ladestrom für die Batterie (B) von außerhalb empfängt;
und ein erstes Querelement (15), das zwischen einem Abschnitt in dem linken Seitenrahmen (11) aufgehängt ist, wobei der Abschnitt von dem Frontseiten-Batterierahmen (32) zu der Fahrzeugfront beabstandet ist, und einem Abschnitt in dem rechten Seitenrahmen (12), wobei der Abschnitt von dem Frontseiten-Batterierahmen (32) zu der Fahrzeugfront beabstandet ist, wobei
das kontaktlose Ladegerät (4) einen Querelement-Anordnungsabschnitt (4A) aufweist, in dem das erste Querelement (15) in der Lage ist, angeordnet zu werden, **dadurch gekennzeichnet, dass**
der Querelement-Anordnungsabschnitt (4A) des kontaktlosen Ladegeräts (4) mit einem Aussparungsabschnitt konfiguriert ist, der in der Lage ist, das erste Querelement (15) unterzubringen.

2. Fahrzeugkarosserie-Frontstruktur nach Anspruch 1, wobei
das erste Querelement (15) einen Zwischenelementabschnitt (15A) aufweist, der in einem Zwischenabschnitt in einer Fahrzeugbreitenrichtung positioniert ist und in dem Querelement-Anordnungsabschnitt (4A) angeordnet ist, und
Außenelementabschnitte (15B, 15C) aufweist, die sich von beiden Endabschnitten des Zwischenelementabschnitts (15A) in der Fahrzeugbreitenrichtung in Richtung der Fahrzeugbreitenrichtung der Außenseiten erstrecken und mit dem linken und rechten Seitenrahmen (11, 12) gekoppelt sind, wobei sich die Außenelementabschnitte (15B, 15C) außerhalb des Querelement-Anordnungsabschnitts (4A) des kontaktlosen Ladegeräts (4) erstrecken.

3. Fahrzeugkarosserie-Frontstruktur nach Anspruch 1 oder 2, wobei
ein zweites Querelement (19), das zwischen dem linken und dem rechten Seitenrahmen (11, 12) aufgehängt ist, an der Fahrzeugrückseite des kontaktlosen Ladegeräts (4) bereitgestellt ist.

4. Fahrzeugkarosserie-Frontstruktur nach Anspruch 1, wobei
der Aussparungsabschnitt eine Form aufweist, die in einer unteren Fläche des kontaktlosen Ladegeräts (4) offen ist.

5. Fahrzeugkarosserie-Frontstruktur nach einem der Ansprüche 1 bis 4, umfassend
ein Paar von linken und rechten Stoßdämpfungselementen (16, 17), die sich in Richtung der Fahrzeugfront des ersten Querelements (15) erstrecken, wobei
ein Frontabschnitt des kontaktlosen Ladegeräts (4) zwischen dem linken und dem rechten Stoßdämpfungselement angeordnet ist.

6. Fahrzeugkarosserie-Frontstruktur nach Anspruch 5, wobei ein Frontelement (18), das sich in Fahrzeugbreitenrichtung in einem Bereich vor dem kontaktlosen Ladegerät (4) erstreckt, mit den linken und rechten Stoßdämpfungselemente (16, 17) verbunden ist und von diesen gestützt wird, wobei der Frontabschnitt des kontaktlosen Ladegeräts (4) zwischen dem Frontelement (18) und dem Querelement (15) angeordnet ist.

7. Fahrzeugkarosserie-Frontstruktur nach einem der vorhergehenden Ansprüche, wobei das Querelement-Anordnungsabschnitt 4A des kontaktlosen Ladegeräts (4) einen nach unten offenen, rillenartigen Kanal in einer Unterseite des kontaktlosen Ladegeräts (4) definiert, wobei das erste Querelement (15) mindestens teilweise in dem Kanal eingesenkt ist.

8. Fahrzeugkarosserie-Frontstruktur nach dem vorhergehenden Anspruch, wobei eine Unterseite des ersten Querelements (15) im Wesentlichen mit einer Unterseite des kontaktlosen Ladegeräts (4) bündig ist und/oder wobei eine Unterseite des kontaktlosen Ladegeräts (4) höher als eine Unterseite des linken und rechten Seitenrahmens (11, 12) angeordnet ist.

9. Fahrzeugkarosserie-Frontstruktur nach einem der vorhergehenden Ansprüche, wobei der Querelement-Anordnungsabschnitt (4A) des kontaktlosen Ladegeräts (4) relativ zu einer Mitte des kontaktlosen Ladegeräts in Richtung der Fahrzeugrückseite versetzt ist und/oder ein Frontabschnitt des kontaktlosen Ladegeräts (4), der vor dem ersten Querelement (15) angeordnet ist, größer als ein hinterer Abschnitt des kontaktlosen Ladegeräts (4) ist, der hinter dem ersten Querelement (15) angeordnet ist.

10. Fahrzeugkarosserie-Frontstruktur nach einem der vorhergehenden Ansprüche, wobei das kontaktlose Ladegerät (4) mindestens eine Spule beinhaltet, die in einem Abschnitt auf einer Frontseite des ersten Querelements (15) untergebracht ist, und mindestens eine Spule beinhaltet, die in einem Abschnitt auf einer Rückseite des ersten Querelements (15) untergebracht ist.

11. Fahrzeugkarosserie-Frontstruktur nach einem der vorhergehenden Ansprüche, wobei sich das Paar von linken und rechten Seitenrahmen (11, 12) unter linken und rechten Hauptseiten-Rahmenelementen (72, 73) einer oberen Struktur (3) erstreckt, wobei das kontaktlose Ladegerät (4) mit einer Oberseite davon niedriger als die Unterseiten der linken und rechten Hauptseiten-Rahmenelemente (72, 73) positioniert ist.

12. Fahrzeug, insbesondere ein Elektrofahrzeug, umfassend eine Fahrzeugkarosserie-Frontstruktur, die nach einem der vorhergehenden Ansprüche definiert ist.

## Revendications

1. Structure avant de carrosserie destinée à un véhicule électrique (1), lequel comprend un moteur de déplacement (M1, M2) et dans lequel un boîtier (10) de batterie, logeant une batterie (B) servant à alimenter en énergie électrique le moteur de déplacement (M1, M2), est disposé au-dessous d'un panneau de plancher (70), la structure avant de carrosserie comprenant :
un cadre (32) de batterie côté avant, lequel est disposé dans une partie avant du boîtier (10) de batterie ;
une paire de cadres latéraux gauche et droit (11, 12), lesquels s'étendent à partir du cadre (32) de batterie côté avant vers la partie avant du véhicule ;
un chargeur sans contact (4), lequel est agencé entre les cadres latéraux gauche et droit (11, 12) et reçoit un courant de charge pour la batterie (B) à partir d'un extérieur ; et
une première traverse (15), laquelle est suspendue entre une partie dans le cadre latéral gauche (11), la partie étant espacée du cadre (32) de batterie côté avant vers l'avant du véhicule, et une partie dans le cadre latéral droit (12), la partie étant espacée du cadre (32) de batterie côté avant vers l'avant du véhicule,
le chargeur sans contact (4) comportant une partie (4A) d'agencement de traverse dans laquelle la première traverse (15) peut être agencée,
**caractérisée en ce que**
la partie (4A) d'agencement de traverse du chargeur sans contact (4) est pourvue d'une partie évidement pouvant loger la première traverse (15).

2. La structure avant de carrosserie selon la revendication 1, dans laquelle
la première traverse (15) comporte une partie élément intermédiaire (15A), laquelle est positionnée dans une partie intermédiaire dans un sens transversal du véhicule et est agencée dans la partie (4A) d'agencement de traverse, et des parties élément extérieur (15B, 15C), lesquelles s'étendent à partir des deux parties d'extrémité de la partie élément intermédiaire (15A) dans le sens transversal du véhicule vers des côtés externes dans le sens transversal du véhicule, et sont accouplées aux cadres latéraux gauche et droit (11, 12), lesdites parties élément extérieur (15B, 15C) s'étendant à l'extérieur de ladite partie (4A) d'agencement de traverse du chargeur sans contact (4).

3. La structure avant de carrosserie selon les revendications 1 ou 2, dans laquelle
une seconde traverse (19), laquelle est suspendue entre les cadres latéraux gauche et droit (11, 12), est disposée vers l'arrière du véhicule par rapport au chargeur sans contact (4).

4. La structure avant de carrosserie selon la revendication 1, dans laquelle
la partie évidement présente une forme qui est ouverte dans une surface inférieure du chargeur sans contact (4).

5. La structure avant de carrosserie selon l'une quelconque des revendications 1 à 4, comprenant
une paire d'éléments d'absorption de choc gauche et droit (16, 17), lesquels s'étendent vers l'avant du véhicule à partir de la première traverse (15),
une partie avant du chargeur sans contact (4) étant positionnée entre les éléments d'absorption de choc gauche et droit.

6. La structure avant de carrosserie selon la revendication 5, dans laquelle un élément avant (18), s'étendant dans le sens transversal du véhicule dans une région vers l'avant du chargeur sans contact (4), est relié auxdits éléments d'absorption de choc gauche et droit (16, 17) et porté par ces derniers, ladite partie avant du chargeur sans contact (4) étant positionnée entre ledit élément avant (18) et ladite traverse (15).

7. La structure avant de carrosserie selon l'une quelconque des revendications précédentes, dans laquelle ladite partie (4A) d'agencement de traverse du chargeur sans contact (4) définit un canal similaire à une rainure ouverte vers le bas dans un côté inférieur du chargeur sans contact (4), et dans laquelle ladite première traverse (15) est fraisée au moins partiellement dans ledit canal.

8. La structure avant de carrosserie selon la revendication précédente, dans laquelle un côté inférieur de ladite première transverse (15) est sensiblement au même niveau qu'un côté inférieur dudit chargeur sans contact (4), et/ou dans laquelle un côté inférieur dudit chargeur sans contact (4) est positionné plus haut qu'un côté inférieur desdits cadres latéraux gauche et droit (11, 12).

9. La structure avant de carrosserie selon l'une quelconque des revendications précédentes, dans laquelle ladite partie (4A) d'agencement de traverse du chargeur sans contact (4) est décalée par rapport à un centre du chargeur sans contact vers l'extrémité arrière du véhicule, et/ou une partie avant du chargeur sans contact (4), positionnée devant la première traverse (15), est plus grande qu'une partie arrière du chargeur sans contact (4) positionnée vers l'arrière de la première traverse (15).

10. La structure avant de carrosserie selon l'une quelconque des revendications précédentes, dans laquelle ledit chargeur sans contact (4) comporte au moins une bobine logée dans une partie sur un côté avant de la première traverse (15), et au moins une bobine logée dans une partie sur un côté arrière de ladite première traverse (15).

11. La structure avant de carrosserie selon l'une quelconque des revendications précédentes, dans laquelle ladite paire de cadres latéraux gauche et droit (11, 12) s'étend au-dessous des éléments châssis latéral principal côtés gauche et droit (72, 73) d'une structure supérieure (3), et dans laquelle un côté supérieur dudit chargeur sans contact (4) est positionné plus bas que les côtés inférieurs desdits éléments châssis latéral principal côtés gauche et droit (72, 73).

12. Véhicule, en particulier un véhicule électrique, comprenant une structure avant de carrosserie telle que définie par l'une quelconque des revendications précédentes.
